# EUROPÄISCHE PATENTANMELDUNG

(11) **EP 2 460 411 A1**
(43) Veröffentlichungstag der Anmeldung: **06.06.2012**
(21) Anmeldenummer: 10193322.4
(22) Anmeldetag: 01.12.2010
(51) Int. Cl.: A22C 7/00, A22C 25/16

(54) **Form zur Herstellung eines gefrorenen und gepressten Fischfiletformproduktes, Herstellungsverfahren und Fischfiletformprodukt selbst**

(71) Anmelder: FRoSTA Aktiengesellschaft, 27572 Bremerhaven (DE)
(72) Erfinder: Kirschnick, Malte, 27580 Bremerhaven (DE); Buschmann, Urban, 31535 Neustadt a Rbg. (DE)
(74) Vertreter: Raffay & Fleck

(57) **Zusammenfassung**

Die Erfindung betrifft eine Form (10) zur Herstellung eines gefrorenen und gepressten Fischfiletformproduktes. Ferner ist die Erfindung auf ein Verfahren zum Herstellen desselben gerichtet. Des Weiteren bezieht sich diese Erfindung auf das Fischfiletformprodukt selbst.
Im Stand der Technik sind seit Jahrzehnten verschiedene Formen mit glatten Oberflächen bekannt, mit denen homogene, rechteckige Fischfleischformstränge und -stücke hergestellt werden, die im Wesentlichen platten- oder streifenförmig sind.
Der Erfindung liegt die Aufgabe zugrunde, die bekannten gefrorenen und gepressten Fischfiletformprodukte ansprechender und natürlicher zu gestalten, so dass ein den Verkauf fördernder Absatz beim kaufenden Publikum möglich wird. Auch sollte eine einfache Form und ein unkompliziertes Herstellungsverfahren an Hand gegeben werden, das keine größeren Änderungen seines Ablaufes erfordert.
Diese Aufgaben und Ziele werden überraschenderweise dadurch gelöst, dass in der Form eine Anordnung linienförmiger, stegartiger Erhebungen (12) vorgesehen ist, die in ihrer Verteilung und in ihrem Verlauf der natürlichen Muskelstruktur oder Maserung im Fischfilet nachempfunden sind.

## Beschreibung

Die Erfindung betrifft eine Form zur Herstellung eines gefrorenen und gepressten Fischfiletformproduktes nach dem Oberbegriff des Anspruchs 1. Ferner ist die Erfindung auf ein Verfahren zum Herstellen eines solches Produktes gerichtet, das die Form nach Anspruch 1 einsetzt. Des Weiteren bezieht sich diese Erfindung auf das Fischfiletformprodukt selbst.

Im Stand der Technik sind seit Jahrzehnten sowohl verschiedene Formen mit glatten Oberflächen, als auch Herstellungsverfahren und letztendlich Formprodukte selbst vorbekannt. Beispielsweise sei hierzu auf die DE-AS 1087 333 von 1960 und die DE-AS 2045059 von 1970 verwiesen. Nach diesen vorbekannten Lehren werden homogene, rechteckige Fischfleischformstränge und -stücke daraus hergestellt, die im Wesentlichen platten- oder streifenförmig sind und keine Lufteinschlüsse aufweisen.

Auch ist es bekannt und üblich, Fischfilets als Platten gehäuft in genormten Außenabmessungen zu frieren und anschließend in Quader zu sägen. Dabei können die Filets in einer Richtung ausgerichtet oder willkürlich angeordnet sein.

In grundsätzlicher Hinsicht besteht jedoch immer Bedarf an Verbesserungen, die die Herstellung einfacher und wirtschaftlicher machen und gleichermaßen Endprodukte liefern, die vom Verbraucher aufgrund ihren exzellenten Optik und in ihrer einfachen Handhabung bei ihrer Zubereitung akzeptiert werden.

Der Erfindung liegt die Aufgabe zugrunde, die bekannten gefrorenen und gepressten Fischfiletformprodukte ansprechender und natürlicher zu gestalten, so dass ein den Verkauf fördernder Absatz beim kaufenden Publikum möglich wird. Auch sollte ein einfaches und unkompliziertes Herstellungsverfahren an Hand gegeben werden, das keine größeren Änderungen seines Ablaufes erfordert und gleichermaßen zu einem ästhetischen Endprodukt führt, das einfach und schnell von jedermann zubereitet werden kann.

Diese Aufgaben und Ziele werden überraschenderweise einerseits durch die Form nach Anspruch 1 gelöst bzw. andererseits durch das Herstellungsverfahren nach Anspruch 10 und natürlich durch das Fischfiletformprodukt nach Anspruch 13 selbst.

Die Erfindung ersetzt die seit Jahrzehnten eingesetzte glatte Oberfläche der Form durch eine solche, die in einer besonderen Weise strukturiert ist, nämlich durch eine Vielzahl von Erhebungen, die voneinander beabstandet sind und als linienförmig oder stegartig bezeichnet werden können und in ihrer Verteilung und ihrem Verlauf der natürlichen Muskelfaserstruktur oder Maserung im Fischfilet nachempfunden sind. Mit anderen Worten: die erfindungsgemäß auf das Fischfilet mit der erfindungsgemäßen Form aufgebrachte Maserung simuliert den natürlichen Muskelfaserverlauf, sodass das Käuferpublikum bei der Zubereitung und dem Verzehr mit einer ansprechenden, natürlichen Optik des Fischfiletformproduktes konfrontiert wird. Dabei konnte die übliche Verfahrensweise der Herstellung durch Sägen, Pressen und Entfernen des gepressten Formlings aus der Form im Wesentlichen beibehalten bleiben, nur musste die Form gegen eine erfindungsgemäße ausgetauscht werden und wurde bezüglich des verwendeten Drucks auf die mit den Erhebungen zu erzielenden Vertiefungen oder Gräben im Formling abgestimmt.

Darüber hinaus bietet eine durch eine solche Form strukturierte Oberfläche eines Fischfiletformprodukts den Vorteil, dass sie ein gleichmäßiges, natürliches Schrumpfen des Fischfiletformproduktes bei der Zubereitung bewirkt. Ein Fisch schrumpft bei der Zubereitung durch die Denaturierung der Einweiße und Wasserverlust. Bekannte Fischfiletformprodukte sind des Weiteren bestrebt, in ihre ursprüngliche Form zurückzukehren und verformen sich dabei häufig unvorteilhaft. Durch die Einschnitte in der Oberfläche des Fischfiletformprodukts wird das bei bekannten Fischfiletformprodukten auftretende lokal unterschiedliche Schrumpfen, das zu Verformungen führt, verhindert. Durch die durch die Erhebungen eingebrachten Einschnitte wird somit das Schrumpfverhalten positiv beeinflusst und das Bestreben, in die ursprüngliche Form zurück zukehren deutlich reduziert.

In besonders vorteilhafter Weise bleibt die gesamte Maserung sowohl bei der Zubereitung als auch dann noch erhalten, wenn der gepresste Formling, nämlich das Fischfiletformprodukt, nach der Entnahme aus der erfinderischen Form mehliert wird. Dabei ist die Maserung auch insbesondere dann gut zu erkennen, wenn Bemehlung beziehungsweise Panade nach der Zubereitung entfernt werden, was beim Verzehr zumindest zu einem gewissen Grad, beispielsweise durch das Zerschneiden, immer passiert.

Gemäß Anspruch 1 ist eine erfindungsgemäße Form zur Herstellung gekennzeichnet durch eine Anordnung linienförmiger, stegartiger Erhebungen, die in ihrer Verteilung und ihrem Verlauf der natürlichen Muskelfaserstruktur oder Maserung im Fischfilet nachempfunden sind. Dabei sind die Erhebungen insbesondere voneinander beabstandet. Dies bedeutet, dass die Form den Vertiefungen durch die Muskelfaserstruktur im Fischfilet invertiert nachempfunden sein muss. Dort wo im Fischfilet Vertiefungen anzutreffen sind, müssen in der Form Erhebungen vorgesehen werden, damit nach dem Pressen mit dieser Form auch im Fischfiletformprodukt an dieser Stelle Vertiefungen erzeugt werden. Die Muskelfaserstruktur bzw. Maserung im Fischfilet weist linienförmige Vertiefungen auf. Diese werden somit invertiert nachempfunden durch entsprechende stegartige Erhebungen in der Form. Diese sind linienförmig und voneinander beabstandet und teilweise gekreuzt.

Vorteilhafterweise verlaufen die Erhebungen dabei im Wesentlichen parallel zueinander und insbesondere quer über die Form, da dies auch im Fischfilet der Fall ist. Dies bedeutet jedoch nicht, dass die Erhebungen gerade verlaufen. Sie verlaufen vielmehr vorteilhafterweise wellenförmig, wobei auch hier kein regelmäßiges Muster vorzusehen ist, weisen jedoch in ihrem Verlauf im Wesentlichen einen gleichbleibenden Abstand zueinander auf, verlaufen somit in ihren einzelnen Abschnitten weitestgehend parallel. In einer vorteilhaften Ausführung ist auch eine Erhebung vorgesehen, die der natürlichen Mittellinie entspricht und in Längsrichtung der Form verläuft. Diese verläuft nicht unbedingt in einer Geraden, sondern kann gewellt und oder gebogen verlaufen. Mit Vorteil verläuft sie in der Mitte der Form.

Auch durch die durch die Mittellinienerhebung hervorgerufene Vertiefung, wird das Schrumpfverhalten deutlich positivbeeinflusst. Insbesondere das Zusammenwirken der mittleren Längsvertiefung mit den dazu quer verlaufenden Vertiefungen führt zu einem besonders positiven Schrumpfverhalten.

Eine solche Form mit derartigen Erhebungen kann auf verschiedenste Art und Weise hergestellt werden. Beispielsweise kann ein Blech entsprechend geformt/gezogen werden. Alternativ können in eine übliche Form, derartige Erhebungen durch Aufbringen von weiterem Material geschaffen oder vorzugsweise, wenn die Form durch Fräsen erzeugt wird, durch Fräsen aus einem vollen Werkstück hergestellt werden.

Mit besonderem Vorteil sind die Erhebungen verfahrbar ausgebildet. Eine Verfahrbarkeit entlang der Oberfläche der Form ermöglicht eine flexible Anordnung der Erhebungen. Mit Vorteil sind die Erhebungen jedoch zumindest senkrecht zur Oberfläche der Form also in das zu pressende Material hinein und aus diesem heraus verfahrbar. Dadurch kann in einem zweistufigen Verfahren zunächst die äußere Kontur erzeugt und sodann durch Ausfahren der Erhebungen eine Maserung erzeugt werden. Auch ist es denkbar, die Erhebungen im ersten Schritt schon teilweise auszufahren und im zweiten Schritt weiter in das zu pressende Material hinein zu fahren.

Durch ein derartiges Vorgehen können Maserungen eingebracht werden, die von besonderer Haltbarkeit auch bei der Zubereitung sind und kann verhindert werden, dass das die unterschiedlichen Formungen (äußere Form und Maserung) sich gegenseitig negativ beeinflussen. So wird das zu pressende Material bei einem (zumindest teilsweise) zweischrittigen Verfahren beim Einbringen der Maserung durch die Form gestützt und fixiert.

Verfahrbare Erhebungen können beispielsweise durch Formen mit Aussparungen und darin verfahrbar angeordneten Erhebungen realisiert werden. Auch ist es denkbar, die Formoberfläche flexibel und insbesondere auch dehnbar zu wählen und durch Verfahren entsprechend dahinter vorgesehener Elemente eine Ausbildung von Erhebungen zu erreichen.

Auch können beispielsweise nur eine Auswahl der vorgesehenen Erhebungen verfahrbar sein und/oder für unterschiedliche Maserungen unterschiedliche (Gruppen von) Erhebungen zur Erzeugung von Maserungen verwendet werden.

Mit Vorteil verlaufen die Erhebungen gleichmäßig voneinander beabstandet und sind im Wesentlichen von einer Seitenkante der Form zur anderen ausgebildet. Darunter ist zu verstehen, dass die Erhebungen sich nicht über die gesamte Breite, also nicht unbedingt von einer Seitenkante zur anderen Seitenkante der Form erstrecken, sondern kurz vor Erreichen der Seitenkante der Form enden. Dies vermittelt einen natürlicheren Eindruck und sorgt darüber hinaus für eine Stabilität der Seitenkante des Fischproduktes, die sich insbesondere bei der Zubereitung als vorteilhaft erweist.

Zu diesem Zweck reichen die Erhebungen vorteilhafterweise bis kurz vor die Seitenkante der Form. Vorteilhafterweise laufen sie in der Mitte im Wesentlichen senkrecht zu den Seitenkanten, vorteilhafterweise entlang der kürzesten Verbindung zwischen den Seitenkanten, krümmen sich jedoch kurz vor Erreichen der Seitenkante so, dass sie im Gegensatz zum mittleren Verlauf einen spitzeren Winkel zur Seitenkante aufweisen. Mit Vorteil weisen sie an ihren Enden einen Winkel zur Seitenkante von 0 bis 45° auf. Darüber hinaus ist der Winkel mit Vorteil bei den schwanzflossenseitig angeordneten Erhebungen geringer, insbesondere zwischen 0 bis 25°, als bei den kopfseitig angeordneten Erhebungen. Das Fischfiletformprodukt ist in der mit einem schwanzflossenseitigen Ende und einem kopfseitigen Ende ausgebildet, wobei das schwanzflossenseitige Ende in der Regel in seiner Breite schmaler ist und/oder spitzer zuläuft als das breitere und/oder stumpfer zulaufende, kopfseitige Ende.

Mit besonderem Vorteil sind die Erhebungen, die prinzipiell jede Querschnittsform, wie beispielsweise oval oder halbrund aufweisen können, in ihrer Querschnittsform dreieckig ausgebildet und weisen sie eine Höhe im Bereich von 1 bis 2 mm, insbesondere von 1,5 mm auf. Durch die Wahl eines dreieckigen Querschnitts kann ein Anritzen beziehungsweise Anschneiden der Oberfläche erfolgen und bleiben die durch die Erhebungen verursachten Vertiefungen auch bei der Zubereitung weitestgehend erhalten. Insbesondere bleiben sie auch bei einer der Formung nachfolgenden Mehlierung des Fischfiletformproduktes besser erhalten bzw. sichtbar. Auch hat sich eine Höhe der Erhebungen von 1 bis 2 mm, insbesondere von 1,5 mm, als besonders vorteilhaft herausgestellt, um die erzeugten Vertiefungen auch bei der Zubereitung bzw. Mehlierung zu erhalten, ohne zu tiefe Maserungen in das Fischfiletformprodukt einzubringen, die einen unnatürlichen Eindruck vermitteln würden.

Mit besonderem Vorteil ist die Querschnittsform der Erhebungen dreieckig ausgebildet und weist die dreieckige Form einen rechten Winkel auf, wobei die an den rechten Winkel angrenzenden Schenkel des Dreiecks parallel zur Form und senkrecht zur Form verlaufen. Dies bedeutet, dass ausgehend von einer ebenen Form sich ein Schenkel des Dreiecks senkrecht in Richtung des zu formenden Fischproduktes erstreckt und an den rechten Winkel nicht angrenzender Schenkel sich an den senkrecht herausragenden Schenkel anschließt und wieder zurück zur Form führt. Dadurch weist die Erhebung eine zur Form senkrechte Flanke und eine zur Form abgewinkelte Flanke auf.

Diese Form der Erhebung hat sich, insbesondere bei anschließender Mehlierung, als besonders vorteilhaft herausgestellt, um die Maserung im Fischfiletformprodukt auch bei der Zubereitung zu erhalten, ohne zu große Vertiefungen in das Fischfiletformprodukt einbringen zu müssen.

Mit besonderem Vorteil ist die im Querschnitt dreieckige Erhebung in der Form so angeordnet, dass der zur Form senkrechte Schenkel auf der Seite des dreieckigen Querschnitts angeordnet ist, die zu einem gegenüber dem anderen Ende der Form in der schmaleren Ende der Form zeigt, also in Richtung des schwanzflossenseitigen Endes zeigt. Diese Anordnung bzw. Orientierung der dreieckigen Erhebungen hat sich als besonders vorteilhaft erwiesen, um einen natürlichen Eindruck zu vermitteln. Darüber hinaus ist er auch besonders vorteilhaft beim beschädigungslosen Entfernen des gepressten Fischfiletformproduktes aus der erfindungsgemäßen Form. Treten beim Entfernen des Fischfiletformproduktes aus der Form Verschiebungen auf, können diese bei genannter Wahl der Form der Erhebungen nur mit geringerer Wahrscheinlichkeit Beschädigungen am geprägten Fischfiletformprodukt hervorrufen, als wenn beispielsweise im Querschnitt dreieckige Erhebungen in der Form mit der invertierten Orientierung angeordnet werden.

Mit Vorteil ist die Form aus Kunststoff oder VA-Stahl gefertigt. Auch können besonders gehärteter Stahl oder andere besonders harte Materialien, wie Titan, insbesondere für die Erhebungen verwendet werden, um eine Abnutzung und/oder Abstumpfung der Erhebungen weitgehend zu verhindern. Dies bedeutet nicht, dass der gesamte Stempel bzw. das gesamte Stück, das die Form aufweist, aus selbigem Werkstoff bestehen müsste. Vielmehr ist es vorteilhaft, eine Form mit genannten Merkmalen zu schaffen, die nur eine geringe Dicke und meist auch eine nicht ausreichende Stabilität aufweist und eine solche Form beispielsweise in einen stabilen Quader einzulassen, der beispielsweise aus Aluminium bestehen kann. Dadurch kann die Form auf einfache Weise hergestellt werden und können die auftretenden Kräfte besonders gut verteilt werden.

Mit Vorteil weist die Form eine Länge im Bereich von 150 bis 200 mm, insbesondere 190 mm, eine maximale Breite im Bereich von 100 bis 130 mm, insbesondere von 120 mm sowie eine Höhe im Bereich von 5 bis 25 mm auf.

Derartige Größen haben sich als vorteilhaft herausgestellt, um natürlich erscheinende und gut handelbare bzw. gut formbare Fischfiletformprodukte herzustellen. Darüber hinaus lassen sich durch diese Größen übliche Portionsgrößen erzielen.

Vorteilhafter Weise weist die Form ein breiteres, stumpfer zulaufenderes Ende und ein schmaleres, spitzer zulaufenderes Ende auf. Dadurch werden ein kopfseitiges und ein schwanzflossenseitiges Ende dargestellt. Dies bedeutet nicht, dass die Form im Wesentlichen dreieckig ausgebildet sein muss. Vielmehr kann insbesondere am breiten Ende zunächst eine Verbreiterung, die dann zum Ende hin noch einmal etwas verjüngt zuläuft, vorgesehen sein. In der Regel wird eine solche Form am schwanzflossenseitigen Ende eine schmale Kante bzw. einen schmalen sich schnell erweiternden Bereich aufweisen, sich von da aus leicht erweiternd Richtung kopfseitigem Ende zu ihrer maximalen Breite erstrecken und von da aus in einem vergleichsweise kurzen Abschnitt ihr Ende finden bzw. eine breite Kante aufweisen.

Mit Vorteil weist die Form im vorderen, breiten Bereich eine Höhe von 18 bis 22 mm, insbesondere von 20 mm, im mittleren Bereich eine Höhe von 12 bis 16 mm, insbesondere von 18 mm und im hinteren, schmalen Bereich von 6 bis 10 mm, insbesondere von 8 mm auf. Dies bedeutet nicht, dass die Form über ihre gesamte Breite jeweils die gleiche Höhe aufweist. Mit den angegebenen Höhen sind die maximale "Höhe" im jeweiligen Längenbereich benannt.

Ein erfindungsgemäßes Verfahren zum Herstellen eines gefrorenen und gepressten Fischfiletformproduktes mit einer Form nach einem oder mehreren der Ansprüche 1 bis 9 ist durch folgende Schritte gekennzeichnet:
a. Sägen von rohen, aus Blöcken bestehenden, gefrorenen Fischfilets zu rechteckigen Quadern,
b. Pressen des rechteckigen Quaders in die Form mit einer Kraft von 50 bis 150 kN, insbesondere von 70, insbesondere innerhalb von 1,5 bis 3 Sek., insbesondere 1,7 bis 2 Sek. insbesondere bei Temperaturen zwischen -9°C und -14°C,
c. Entfernen des gepressten, einen Abdruck der Erhebungen aufweisenden Fischfiletformproduktes aus der Form.

Ein gewünschtes Fischfiletformprodukt kann durch dieses Verfahren auf einfache und zuverlässige Weise hergestellt werden und weist danach die gewünschten Maserungen auf. Eine Temperatur zwischen -9°C und -14°C ist besonders geeignet, um einerseits ein Auftauen bzw. Antauen des Fischfilets zu verhindern und andererseits ein effizientes Formen zu ermöglichen. Dabei werden bei erfindungsgemäßen Formen Kräfte von 50 bis 150 kN, je nach Größe der Form und Temperatur des Fischfiletquaders, benötigt. Auch die Zeitdauer des Pressens bzw. des Einpressens der Form hat Auswirkungen auf das Ergebnis. Je langsamer die Form eingedrückt wird, desto besser ist das Endergebnis. Wird die Einpressung zu schnell vorgenommen, kommt es zu Schädigungen des Fischfiletformproduktes. In der Produktion sind jedoch kurze Einpresszeiten erforderlich. Die genannten Zeiten haben sich als besonders vorteilhaft herausgestellt, indem Sie eine Formung ohne merkliche Beschädigung bewirken und eine schnelle Herstellung ermöglichen.

Mit besonderem Vorteil wird Schritt b mit zumindest teilweise eingefahrenen Erhebungen durchgeführt. Das bedeutet, dass zumindest ein Teil der Erhebungen im weiteren Verfahrensablauf noch weiter ausgefahren wird.

Somit wird zwischen den Schritten b und c zumindest eine Erhebung weiter ausgefahren. Beim Ausfahren wird die Erhebung (weiter) in das Fischfiletformprodukt gedrückt.

Dadurch lassen sich besonders haltbare Maserungen erzeugen.

Mit Vorteil wird das Fischfiletformprodukt nach dem Entfernen aus der Form mit einer Mehlschicht unter Beibehaltung des Abdruckes der Maserung versetzt. Die Maserung bleibt dann sichtbar erhalten, wenn eine erfindungsgemäße Form, insbesondere mit Maserungen, die die genannten dreieckigen Querschnittsformen aufweisen, verwendet wird. Alternativ oder zusätzlich kann die Bemehlung auf eine Art durchgeführt werden, die die Maserung erhält. Denkbar sind hier beispielsweise das gezielte Auftragen einer bestimmten und konstanten Menge Mehl pro Fläche des Fischfiletformproduktes oder sogar die reduzierte Auftragung von Mehl im Bereich jeder Maserung. Dies kann durch entsprechende Formen zur Auftragung bzw. durch entsprechende Siebe zur Auftragung realisiert werden. Auch ist es möglich, zur Bemehlung eine erfindungsgemäße, bemehlte Form zu verwenden.

Ein erfindungsgemäßes Fischfiletformprodukt besteht zumindest hauptsächlich aus gefrorenem und gepresstem Fischfilet, wobei eine Oberfläche des Fischfiletformproduktes eine Anordnung von einander beabstandeter, linienförmiger Erhebungen aufweist, die in ihrer Verteilung und in ihrem Verlauf der natürlichen Muskelfaserstruktur oder Maserung im Fischfilet nachempfunden sind. Ein solches Fischfiletformprodukt lässt sich unter Verwendung der Form gemäß einer der Ansprüche 1 bis 9 bzw. durch ein Verfahren gemäß der Ansprüche 10 bis 12 herstellen. Es ist besonders vorteilhaft, da es, auch nach der Zubereitung, einem natürlichen Fischfilet sehr ähnlich ist. Dadurch kann auch bei der Zubereitung ein möglichst gleicher Geschmack und eine natürliche Textur realisiert werden. Dies ermöglicht auch die Verwendung von Fischfiletresten zur Herstellung von Fischfiletformprodukten mit ähnlichem Geschmack und ähnlicher Textur wie natürlichem Fischfilet.

Mit besonderem Vorteil weist das Fischfiletformprodukt eine mehlierte Oberfläche auf, insbesondere eine solche, die die Maserungen erkennen lässt.

Mit besonderem Vorteil ist das Fischfiletformprodukt aus einem natürlichen Fischfilet, insbesondere Lachs, Alaskaseelachs, Seelachs, Seehecht, Pangasius oder Tilapia hergestellt und weist ein Gewicht von 140 bis 160 g, insbesondere 153 g, auf.

Mit Vorteil ist seine Dicke in Längsrichtung vom breiten, vorderen Ende zum schmalen hinteren Ende kontinuierlich geringer werdend.

Vorteilhafterweise weist es eine Dicke im vorderen, breiten Bereich von 18 bis 22 mm, insbesondere von 20 mm, im mittleren Bereich von 12 bis 16 mm, insbesondere von 18 mm, und im hinteren, schmaleren Bereich von 6 bis 10 mm, insbesondere 8 mm auf.

Mit Vorteil sind die Maserungen durch Erhebungen in der Pressform mit einer Höhe von 1 bis 2 mm, insbesondere 1,5 mm erzeugt worden und weisen somit selbst eine entsprechende Tiefe auf. Diese Tiefe beträgt in der Regel zwischen 0,5 und 2 mm. Die Vertiefungen weisen darüber hinaus mit Vorteil eine senkrecht in das Fischfiletformprodukt hinein verlaufende Flanke und eine abgeschrägte Flanke auf, sind also insbesondere im Querschnitt weitestgehend dreiecksförmig.

Mit Vorteil weist das Fischfiletformprodukt eine Länge im Bereich von 150 bis 200 mm, insbesondere von 190 mm, eine maximale Breite im Bereich von 100 bis 130 mm, insbesondere von 120 mm, sowie eine Höhe im Bereich von 5 bis 25 mm auf. Jede beliebige Form ist denkbar.

Weitere Vorteile und mögliche Ausführungsformen werden anhand der folgenden Ausführungsbeispiele geschildert. Diese sind, wie die dazu verwendeten Zeichnungen, rein schematisch und nicht beschränkend.

Im Einzelnen zeigen:
- Fig. 1: eine Aufsicht auf eine erfindungsgemäße Form in einem Quader;
- Fig. 2: einen Längsschnitt durch eine erfindungsgemäße Form in einem Quader;
- Fig. 3: einen Querschnitt durch eine erfindungsgemäße Form in einem Quader;
- Fig. 4: einen Querschnitt durch eine erfindungsgemäße Form in einem Quader;
- Fig. 5: eine Aufsicht auf ein erfindungsgemäßes Fischfiletformprodukt;
- Fig. 6: einen Längsschnitt durch ein erfindungsgemäßes Fischfiletformprodukt;
- Fig. 7: einen Querschnitt durch ein erfindungsgemäßes Fischfiletformproduktes; und
- Fig. 8: einen Querschnitt durch ein erfindungsgemäßes Fischfiletformproduktes.

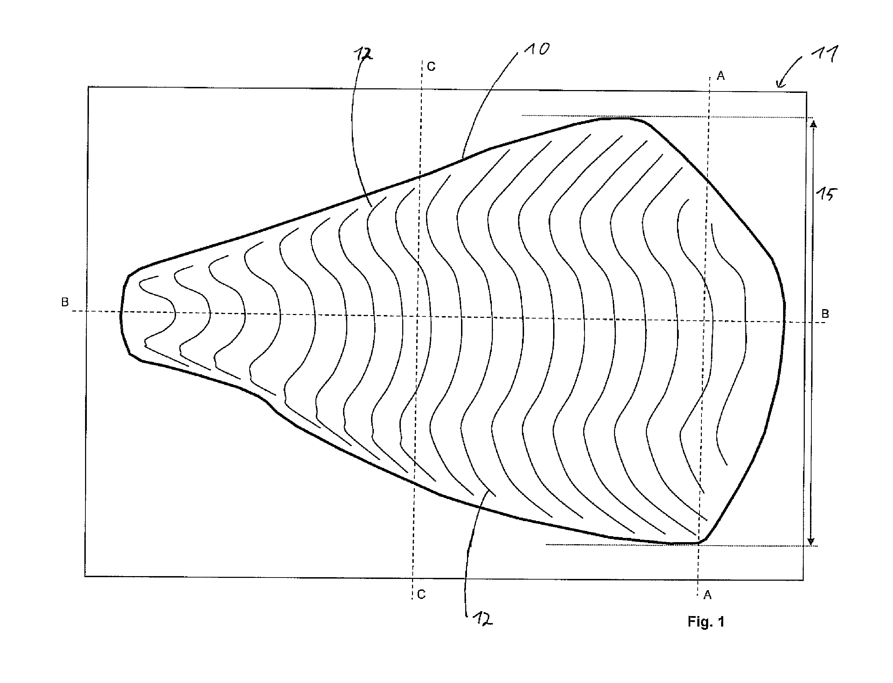

Fig. 1 zeigt eine Aufsicht auf eine erfindungsgemäße Form 10, die in einem Quader 11 aufgenommen ist. Eine solche Form wird normalerweise so gedreht, dass die gezeigte Ansicht von unten sichtbar ist und sodann auf einen liegenden Fischfiletquader gepresst.

Zu erkennen ist, dass die Form 10 in einem Quader 11 aufgenommen ist. Die Form 10 weist Erhebungen 12 auf, die linienartig und wellenförmig über die Form 10 verlaufen. Dabei erstrecken sich die linienförmigen Erhebungen 12 von einem gewissen Abstand vom Seitenrand der Form 10 beginnend zum gegenüberliegenden Seitenrand der Form 10, wobei sie von diesem Seitenrand wiederum einen gewissen Abstand wahren. Dabei verlaufen die Erhebungen in der Mitte weitestgehend parallel zur kürzesten Verbindung zwischen den Seitenkanten der Form 10. An ihren seitlichen Enden verlaufen die Erhebungen 12 jedoch deutlich paralleler zur Seitenkante. Dabei verlaufen die Erhebungen 12 an dem schmalen, in der Zeichnung links befindlichen, Ende, dem schwanzflossenseitigen Ende, weitestgehend parallel zur Seitenkante, während sie am breiteren, kopfseitigen Ende einen Winkel zur Seitenkante aufweisen, der in Richtung kopfseitigem Ende ansteigt, kurz vor dem kopfseitigen Ende ca. 90° aufweist und lediglich bezüglich der letzten zwei kopfseitigen Erhebungen 12 wiederum einen abweichenden Winkel aufzeigt. Die Form 10 weist dabei ein schmales, schwanzflossenseitiges Ende, links in der Zeichnung, auf, verbreitert sich dann, um zuletzt wieder einen kopfseitigen Abschluss zu finden.

Die Form 10 weist eine Breite 15 von 121 mm auf. In der Zeichnung sind des Weiteren Querschnittslinien B-B, C-C und A-A eingezeichnet, deren Querschnitte in den nachfolgenden Figuren abgebildet sind.

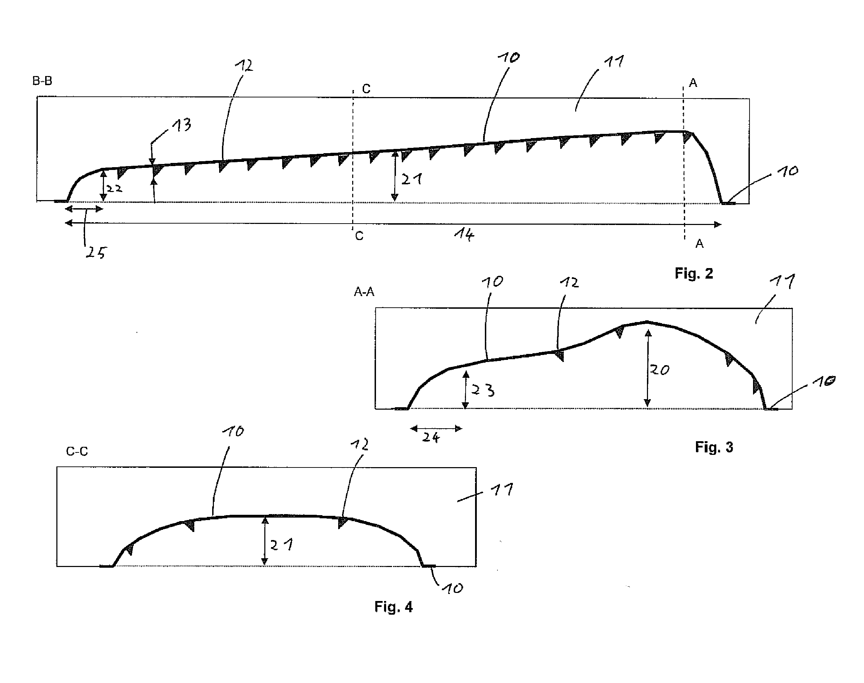

Fig. 2 zeigt einen Längsschnitt entlang der Schnittlinie B-B aus Fig. 1. Zu erkennen ist die Form 10, die in einem Quader 11 eingelassen ist.

Die Form 10 weist nach innen ragende Erhebungen 12 auf, die in ihrem Querschnitt dreiecksförmig ausgebildet sind. Dabei weisen die dreieckförmigen Erhebungen 12 einen rechten Winkel auf. Ein an den rechten Winkel angrenzender Schenkel erstreckt sich senkrecht von der Form 10 nach unten, während der andere am rechten Winkel angrenzende Schenkel sich entlang der Form 10 erstreckt. Dabei ist der senkrecht von der Form 10 herausragende Schenkel dem schwanzflossenseitigen Ende, links in der Figur, zugewandt. Die flacher verlaufende Flanke der Erhebung 12 ist dem kopfseitigen Ende, in der Figur rechts, zugewandt. Die Erhebungen 12 weisen eine Höhe 13 von 1,5 mm auf. Die Länge 14 der Form 10 beträgt 190 mm. Die Form 10 weist nach einer Schwanzanstiegslänge 25 von 10 mm eine Schwanzhöhe 22 von 8 mm an und steigt dann weitestgehend linear an, bis sie im Rumpf eine Rumpfhöhe 21 von 14 mm erreicht. Danach steigt sie weiterhin weitestgehend linear an, bis sie eine Kopfhöhe 20 von 20 mm erreicht. Danach fällt sie wieder ab. Zu erkennen ist, dass die Form 10 sich im Querschnitt nach rechts und links, in Realität ringsherum um die Form 10 eine gewisse Breite parallel zur Unterkante des Quaders 11 erstreckt. Dadurch kann eine besonders saubere Seitenkante an dem Fischfiletformprodukt beim Pressen erzeugt werden.

Darüber hinaus sind in der Fig. 2 die Querschnittslinien C-C und A-A zu erkennen.

Fig. 3 zeigt einen Querschnitt durch die Form aus den Figuren 1 und 2 entlang der Querschnittslinie A-A. Zu erkennen ist, dass die Form nicht über ihre gesamte Breite eine konstante Höhe aufweist. Im Kopfbereich weist sie vielmehr zwei Höhenabschnitte auf. Zu nennen ist hier die Kopfhöhe 20 mit einer Höhe von 20 mm sowie die Bauchhöhe 23 mit einer Höhe von 14 mm. Zu erkennen ist, dass die Bauchhöhe 23 nach einer Bauchanstiegslänge 24 von 16 mm erreicht wird.

Darüber hinaus ist in Fig. 3 zu erkennen, dass die dreieckförmigen Erhebungen jeweils einen senkrecht zur Form 10 verlaufenden Schenkel aufweisen. In der Zusammenschau mit Fig. 1 ist auch zu erkennen, dass dieser sich senkrecht nach innen erstreckende Schenkel, jeweils zum schwanzflossenseitigen Ende weist.

Fig. 4 zeigt einen Querschnitt entlang der Querschnittslinie C-C aus den Figuren 1 bzw. 2. Zu erkennen ist, dass die Form 10 im Rumpfbereich, wie auch im Flossenbereich, eine einzige Höhe aufweist und zu den Seiten hin abfällt. Die Form 10 weist hier eine Rumpfhöhe 21 von 14 mm auf.

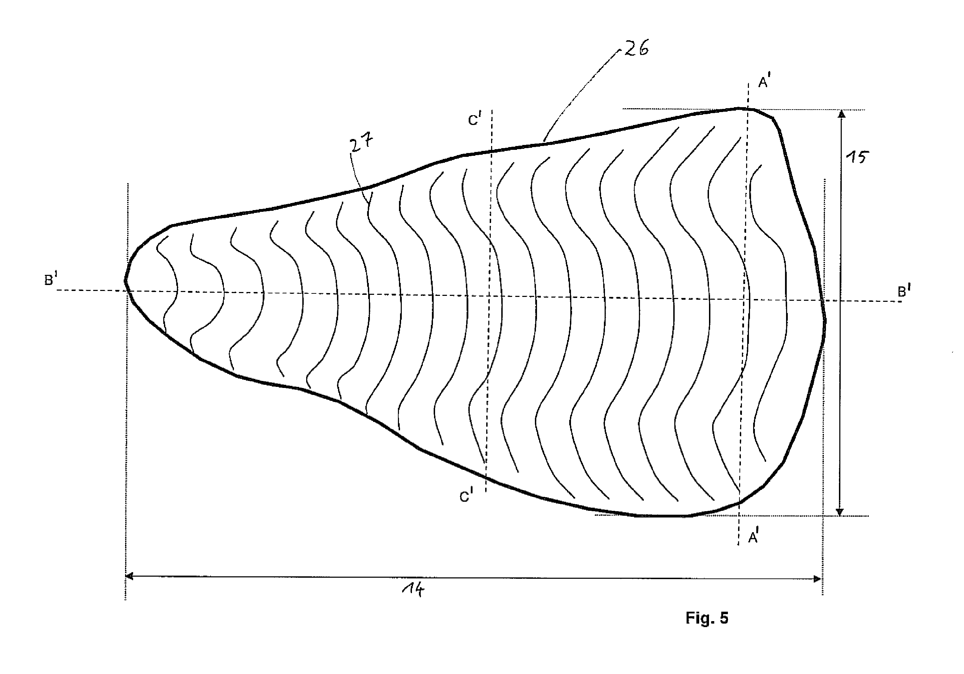

Fig. 5 zeigt eine Aufsicht auf ein Fischfiletformprodukt 26, das durch eine, der in den Figuren 1 bis 4 gezeigte Form ähnliche Form hergestellt wurde. Zu erkennen ist, dass das Fischfiletformprodukt 26 eine maximale Breite 15 von 105 mm aufweist und eine Länge 14 von 180 mm hat. Dabei weist das Fischfiletformprodukt 26 ein schwanzflossenseitiges Ende, links in der Figur, und ein kopfseitiges Ende, rechts in der Figur, auf. Am schwanzflossenseitigen Ende verbreitert sich das Fischfiletformprodukt 26 zunächst schnell, bis es in einen Bereich der langsamen Verbreiterung übergeht und seine maximale Breite 15 dann kurz vor dem kopfseitigen Ende erreicht und sich daran anschließend wieder zum Ende hin verjüngt.

Zu erkennen sind auch die durch Erhebungen in der Form hervorgerufenen Vertiefungen 27. Diese verlaufen wellenförmig mit einem gewissen Abstand zu den Seitenkanten zwischen den Seitenkanten. Zu erkennen sind darüber hinaus Querschnittslinien A'-A', B'-B' und C'-C', deren Querschnitte in den nachfolgenden Figuren gezeigt sind.

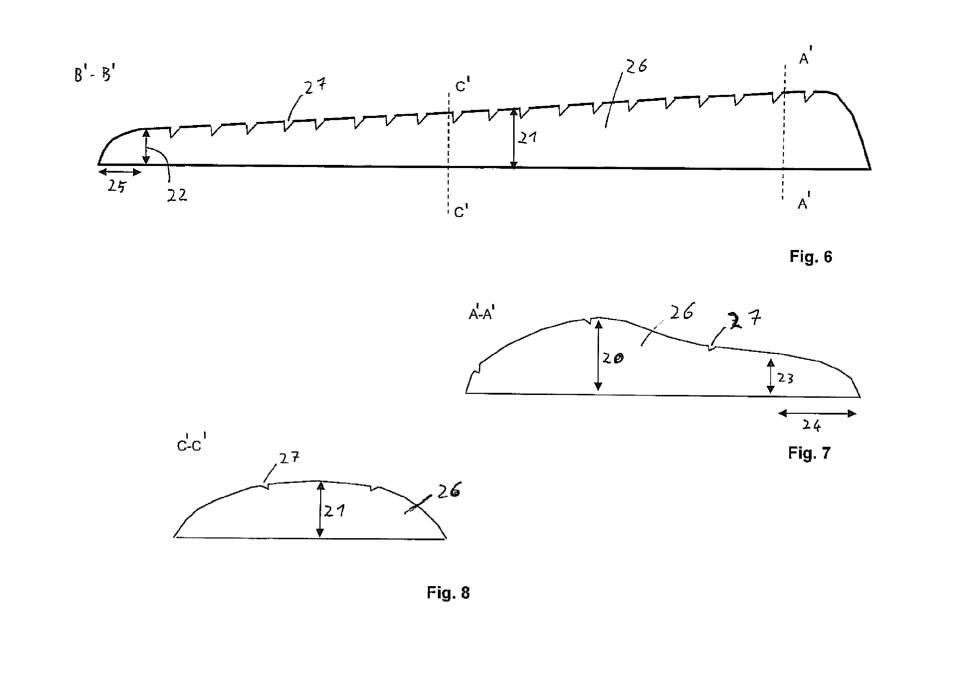

Fig. 6 zeigt einen Schnitt entlang B'-B'. Zu erkennen sind die über die Länge 14 angeordneten Vertiefungen 27 im Fischfiletformprodukt 26. Das Fischfiletformprodukt 26 weist nach einer Schwanzanstiegslänge 25 von 10 mm eine Schwanzhöhe 22 von 8 mm auf. Von da an steigt es linear in der Dicke an, bis es eine Rumpfhöhe 21 von 14 mm erreicht. Daraufhin steigt es teilweise weiter an, wie in Fig. 7 zu erkennen ist.

Fig. 7 zeigt einen Querschnitt entlang A'-A'. Zu erkennen ist, dass das Fischfiletformprodukt im Kopfbereich zwei unterschiedliche Höhen aufweist, zum einen die Kopfhöhe 20 mit 20 mm und zum anderen die Bauchhöhe 23 mit 14 mm, die nach einer Bauchanstiegslänge 24 von 16 mm erreicht wird.

Ebenfalls zu erkennen sind die dreieckförmigen Vertiefungen 27. In der Zusammenschau mit Fig. 5 ist dabei zu erkennen, dass die senkrechten Schenkel der Vertiefungen in Richtung des schwanzseitigen Endes zeigen.

Fig. 8 zeigt einen Querschnitt entlang der Querschnittslinie C'-C' aus den Figuren 5 und 6. Zu erkennen ist, dass das Fischfiletformprodukt eine Rumpfhöhe 21 von 14 mm aufweist und zu den Seiten hin abfällt. Darüber hinaus zu erkennen sind Vertiefungen 27.

Weitere Abwandlungen und Anpassungen sind für den Fachmann für den jeweiligen Anwendungsfall auffindbar.

### Bezugszeichenliste

- 10: Form
- 11: Quader
- 12: Erhebungen
- 13: Höhe der Erhebung
- 14: Länge
- 15: Breite
- 20: Kopfhöhe
- 21: Rumpfhöhe
- 22: Schwanzhöhe
- 23: Bauchhöhe
- 24: Bauchanstiegslänge
- 25: Schwanzanstiegslänge
- 26: Fischfiletformproduktes
- 27: Vertiefung

## Patentansprüche

1. Form (10) zur Herstellung eines gefrorenen und gepressten Fischfiletformproduktes (26), **dadurch gekennzeichnet, dass** in der Form (10) eine Anordnung linienförmiger, stegartiger Erhebungen (12) vorgesehen ist, die in ihrer Verteilung und in ihrem Verlauf der natürlichen Muskelfaserstruktur oder Maserung im Fischfilet nachempfunden sind.

2. Form (10) nach Anspruch 1 **dadurch gekennzeichnet, dass** die Erhebungen zumindest teilweise als verfahrbare, insbesondere senkrecht zur Oberfläche der Form und insbesondere in Richtung der Erhebung verfahrbare, Elemente ausgebildet sind.

3. Form (10) nach einem oder mehreren der vorstehenden Ansprüche, dass die Erhebungen (12) gleichmäßig voneinander beabstandet sind und im Wesentlichen von einer Seitenkante der Form zur anderen verlaufen und/oder eine Erhebung in Längsrichtung, insbesondere mittig, über die Form verläuft.

4. Form (10) nach einem oder mehreren der vorstehenden Ansprüche, **dadurch gekennzeichnet, dass** die Erhebungen (12) 8-12 mm, insbesondere 10 mm, voneinander beabstandet sind und eine wellenförmige Struktur aufweisen.

5. Form (10) nach einem oder mehreren der vorstehenden Ansprüche, **dadurch gekennzeichnet, dass** die Erhebungen (12) in ihrer Querschnittsform dreieckig sind und eine Höhe im Bereich von 1 - 2 mm, insbesondere 1,5 mm, aufweisen.

6. Form (10) nach Anspruch 5, **dadurch gekennzeichnet, dass** die Erhebungen (12) in ihrer Querschnittsform dreieckig sind, wobei die dreieckige Form insbesondere einen rechten Winkel aufweist und die an den rechten Winkel angrenzenden Schenkel parallel zur Form und senkrecht zur Form verlaufen.

7. Form (10) nach Anspruch 6, **dadurch gekennzeichnet, dass** der zur Form senkrechte Schenkel auf der Seite des dreieckigen Querschnitts liegt, die zu einem gegenüber dem anderen Ende der Form in der Breite schmaleren und/oder spitzer zulaufenderen Ende der Form zeigt.

8. Form (10) nach einem oder mehreren der vorstehenden Ansprüche, **dadurch gekennzeichnet, dass** sie aus Kunststoff oder VA- Stahl besteht.

9. Form (10) nach einem oder mehreren der vorstehenden Ansprüche, **dadurch gekennzeichnet, dass** sie eine Länge (14) im Bereich von 150 - 200 mm, insbesondere von 190 mm, eine maximale Breite (15) im Bereich von 100 - 130 mm, insbesondere von 120 mm, sowie eine Höhe (20, 21, 22, 23) im Bereich von 5 - 25 mm, aufweist.

10. Verfahren zum Herstellen eines gefrorenen und gepressten Fischfiletformproduktes (26) mit der Form (10) nach einem oder mehreren der vorstehenden Ansprüche 1 - 9, **gekennzeichnet durch** die folgenden Stufen:
a. Sägen von rohen, aus Blöcken bestehenden gefrorenen Fischfilets zu rechteckigen Quadern
b. Pressen des rechteckigen Quaders in die Form (10) mit einer Kraft von 50 - 150kN, insbesondere 70kN, insbesondere innerhalb von 1,5 - 3 Sek., insbesondere 1,7 - 2 Sekunden, insbesondere bei Temperaturen zwischen -9° und -14°C,
c. Entfernen des gepressten, einen Abdruck der Erhebungen (12) aufweisenden Fischfiletformproduktes (26) aus der Form (10).

11. Verfahren nach Anspruch 10, **dadurch gekennzeichnet, dass** Schritt b mit zumindest teilweise eingefahrenen Erhebungen durchgeführt wird und zwischen Schritt b und c mindestens eine der Erhebungen in das Fischfilets ausgefahren wird, insbesondere mit einer Kraft von 50 - 150kN, insbesondere 70kN, insbesondere innerhalb von 1,5 - 3 Sek., insbesondere 1,7 - 2 Sekunden, insbesondere bei Temperaturen zwischen -9° und -14°C.

12. Verfahren nach einem der Ansprüche 10 bis 11, **dadurch gekennzeichnet, dass** die gesamte Oberfläche des aus der Form (10) entfernten Fischfiletformproduktes (26) mit einer Mehlschicht unter Beibehaltung des Abdruckes der Maserung (14) versetzt wird.

13. Fischfiletformprodukt (26) umfassend gefrorenes und gepresstes Fischfilet, **dadurch gekennzeichnet, dass** eine Oberfläche des Fischfiletformproduktes eine Anordnung voneinander beabstandeter, linienförmiger Erhebungen (12) aufweist, die in ihrer Verteilung und in ihrem Verlauf der natürlichen Muskelfaserstruktur oder Maserung im Fischfilet nachempfunden sind.

14. Fischfiletformprodukt (26) nach Anspruch 13, **dadurch gekennzeichnet, dass** es eine mehlierte Oberfläche besitzt.

15. Fischfiletformprodukt (26) nach Anspruch 13 oder 14, **dadurch gekennzeichnet, dass** es aus einem natürlichem Fischfilet, insbesondere Lachs, insbesondere Alaska Seelachs, Seelachs, Seehecht, Pangsius, Tilapia mit einem Gewicht von 60 - 200, insbesondere 140 - 160g, insbesondere 153g, besteht und insbesondere seine Dicke in Längsrichtung vom breiten vorderen Ende zum schmaleren hinteren Ende kontinuierlich geringer wird und insbesondere seine Dicke im vorderen breiten Bereicht 18-22 mm, insbesondere 20 mm, im mittleren Bereich 12-16 mm, insbesondere 18 mm und im hinteren schmalen Bereich 6-10 mm, insbesondere 8 mm beträgt.

## Geänderte Patentansprüche

### Geänderte Patentansprüche gemäss Regel 137(2) EPÜ.

**1.** Form (10) zur Herstellung eines gefroren gepressten Fischfiletformproduktes (26), mit eine Anordnung linienförmiger, stegartiger Erhebungen (12), die in ihrer Verteilung und in ihrem Verlauf der natürlichen Muskelfaserstruktur oder Maserung im Fischfilet nachempfunden sind.

**2.** Form (10) nach Anspruch 1 **dadurch gekennzeichnet, dass** die Erhebungen zumindest teilweise als verfahrbare, insbesondere senkrecht zur Oberfläche der Form und insbesondere in Richtung der Erhebung verfahrbare, Elemente ausgebildet sind.

**3.** Form (10) nach einem oder mehreren der vorstehenden Ansprüche, dass die Erhebungen (12) gleichmäßig voneinander beabstandet sind und im Wesentlichen von einer Seitenkante der Form zur anderen verlaufen und/oder eine Erhebung in Längsrichtung, insbesondere mittig, über die Form verläuft.

**4.** Form (10) nach einem oder mehreren der vorstehenden Ansprüche, **dadurch gekennzeichnet, dass** die Erhebungen (12) 8-12 mm, insbesondere 10 mm, voneinander beabstandet sind und eine wellenförmige Struktur aufweisen.

**5.** Form (10) nach einem oder mehreren der vorstehenden Ansprüche, **dadurch gekennzeichnet, dass** die Erhebungen (12) in ihrer Querschnittsform dreieckig sind und eine Höhe im Bereich von 1 - 2 mm, insbesondere 1,5 mm, aufweisen.

**6.** Form (10) nach Anspruch 5, **dadurch gekennzeichnet, dass** die Erhebungen (12) in ihrer Querschnittsform dreieckig sind, wobei die dreieckige Form insbesondere einen rechten Winkel aufweist und die an den rechten Winkel angrenzenden Schenkel parallel zur Form und senkrecht zur Form verlaufen.

**7.** Form (10) nach Anspruch 6, **dadurch gekennzeichnet, dass** der zur Form senkrechte Schenkel auf der Seite des dreieckigen Querschnitts liegt, die zu einem gegenüber dem anderen Ende der Form in der Breite schmaleren und/oder spitzer zulaufenderen Ende der Form zeigt.

**8.** Form (10) nach einem oder mehreren der vorstehenden Ansprüche, **dadurch gekennzeichnet, dass** sie aus Kunststoff oder VA- Stahl besteht.

**9.** Form (10) nach einem oder mehreren der vorstehenden Ansprüche, **dadurch gekennzeichnet, dass** sie eine Länge (14) im Bereich von 150 - 200 mm, insbesondere von 190 mm, eine maximale Breite (15) im Bereich von 100 - 130 mm, insbesondere von 120 mm, sowie eine Höhe (20, 21, 22, 23) im Bereich von 5 - 25 mm, aufweist.

**10.** Verfahren zum Herstellen eines gefroren gepressten Fischfiletformproduktes (26) mit der Form (10) nach einem oder mehreren der vorstehenden Ansprüche 1 - 9, **gekennzeichnet durch** die folgenden Stufen:
a. Sägen von rohen, aus Blöcken bestehenden gefrorenen Fischfilets zu rechteckigen Quadern
b. Pressen des rechteckigen Quaders in die Form (10) mit einer Kraft von 50 - 150kN, insbesondere 70kN, insbesondere innerhalb von 1,5 - 3 Sek., insbesondere 1,7 - 2 Sekunden, insbesondere bei Temperaturen zwischen -9° und -14°C,
c. Entfernen des gepressten, einen Abdruck der Erhebungen (12) aufweisenden Fischfiletformproduktes (26) aus der Form (10).

**11.** Verfahren nach Anspruch 10, **dadurch gekennzeichnet, dass** Schritt b mit zumindest teilweise eingefahrenen Erhebungen durchgeführt wird und zwischen Schritt b und c mindestens eine der Erhebungen in das Fischfilets ausgefahren wird, insbesondere mit einer Kraft von 50 - 150kN, insbesondere 70kN, insbesondere innerhalb von 1,5 - 3 Sek., insbesondere 1,7 - 2 Sekunden, insbesondere bei Temperaturen zwischen -9° und -14°C.

**12.** Verfahren nach einem der Ansprüche 10 bis 11, **dadurch gekennzeichnet, dass** die gesamte Oberfläche des aus der Form (10) entfernten Fischfiletformproduktes (26) mit einer Mehlschicht unter Beibehaltung des Abdruckes der Maserung (14) versetzt wird.

**13.** Fischfiletformprodukt (26) umfassend gefroren gepresstes Fischfilet, **dadurch gekennzeichnet, dass** eine Oberfläche des Fischfiletformproduktes eine Anordnung voneinander beabstandeter, linienförmiger Vertiefungen (27) aufweist, die in ihrer Verteilung und in ihrem Verlauf der natürlichen Muskelfaserstruktur oder Maserung im Fischfilet nachempfunden sind.

**14.** Fischfiletformprodukt (26) nach Anspruch 13, **dadurch gekennzeichnet, dass** es eine mehlierte Oberfläche besitzt.

**15.** Fischfiletformprodukt (26) nach Anspruch 13 oder 14, **dadurch gekennzeichnet, dass** es aus einem natürlichem Fischfilet, insbesondere Lachs, insbesondere Alaska Seelachs, Seelachs, Seehecht, Pangsius, Tilapia mit einem Gewicht von 60 - 200, insbesondere 140 - 160g, insbesondere 153g, besteht und insbesondere seine Dicke in Längsrichtung vom breiten vorderen Ende zum schmaleren hinteren Ende kontinuierlich geringer wird und insbesondere seine Dicke im vorderen breiten Bereicht 18-22 mm, insbesondere 20 mm, im mittleren Bereich 12-16 mm, insbesondere 18 mm und im hinteren schmalen Bereich 6-10 mm, insbesondere 8 mm beträgt.
